# EUROPEAN PATENT SPECIFICATION

(11) **EP 4 235 889 B1**
(45) Date of publication and mention of the grant of the patent: **02.12.2026**
(21) Application number: 22890238.3
(22) Date of filing: 21.10.2022
(51) Int. Cl.: H01M 10/04, H01M 10/0587, H01M 50/531, H01M 50/536, H01M 50/107

(54) **CYLINDRICAL SECONDARY BATTERY HAVING HIGH STRUCTURAL SAFETY AND METHOD OF MANUFACTURING THE SAME**
ZYLINDRISCHE SEKUNDÄRBATTERIE MIT HOHER STRUKTURELLER SICHERHEIT UND HERSTELLUNGSVERFAHREN DAFÜR
BATTERIE SECONDAIRE CYLINDRIQUE PRÉSENTANT UNE ELEVÉE SÉCURITÉ STRUCTURALE ET SON PROCÉDÉ DE FABRICATION

(30) Priority: 02.11.2021 KR 20210148568
(43) Date of publication of application: 30.08.2023
(73) Proprietor: LG Energy Solution, Ltd., Seoul 07335 (KR)
(72) Inventor: YOON, Dong Sik, Daejeon 34122 (KR)
(74) Representative: Plasseraud IP
(86) International application number: PCT/KR2022/016108
(87) International publication number: WO 2023/080503

(56) References cited:
- CN-A- 104 269 579
- JP-A- 2002 157 991
- JP-A- 2013 187 077
- JP-A- H1 126 023
- JP-A- H11 345 626
- KR-A- 20110 031 063
- KR-A- 20180 000 223
- US-A1- 2012 009 450

## Description

### [Technical Field]

This application claims the benefit of priority based on Korean Patent Application No. 10-2021-0148568, filed on November 02, 2021.

The present invention relates to a cylindrical secondary battery having high structural safety and a method of manufacturing the same.

### [Background Art]

As the prices of energy sources increase due to depletion of fossil fuels and interest in environmental pollution increases, the demand for environmentally friendly alternative energy sources is becoming an indispensable factor for life in the future. In particular, as technology development and the demand for mobile devices increase, the demand for secondary batteries as energy sources is rapidly increasing.

Typically, in terms of shapes of batteries, there is a high demand for prismatic secondary batteries and pouch type secondary batteries that can be applied to products such as mobile phones due to their small thickness. In terms of materials, there is a high demand for lithium secondary batteries such as lithium ion batteries and lithium ion polymer batteries having high energy density, discharge voltage, and output stability.

Generally, a secondary battery is manufactured by applying an electrode mixture including an electrode active material on a surface of a current collector to form a positive electrode and a negative electrode, inserting a separator between the positive electrode and the negative electrode to manufacture an electrode assembly, mounting the electrode assembly in a cylindrical or rectangular metal can or a pouch type case of an aluminum laminate sheet, and then injecting or impregnating a liquid electrolyte into the electrode assembly or using a solid electrolyte.

**In** addition, secondary batteries may be classified according to a structure of an electrode assembly having a positive electrode/separator/negative electrode structure. Representative examples thereof may include a j elly-roll type (wound type) electrode assembly having a structure in which long sheet-like positive electrodes and negative electrodes are wound with a separator interposed therebetween, a stack type electrode assembly having a structure in which a plurality of positive electrodes and negative electrodes cut to a certain size unit are sequentially stacked with a separator interposed therebetween, and a stack/folding type electrode assembly having a structure in which bi-cells or full cells in which positive electrodes and negative electrodes are stacked in a certain unit with a separator interposed therebetween are wound with a separator sheet.

Meanwhile, an electrode generates a current through the exchange of ions, and a positive electrode and a negative electrode constituting the electrode has a structure in which an electrode active material is applied to an electrode current collector made of a metal. **In** general, the negative electrode has a structure in which a carbon-based active material is applied on an electrode plate made of copper, aluminum, or the like and a positive electrode has a structure in which an active material made of LiCoO₂, LiMnO₂, LiNiO₂, or the like is applied on an electrode plate made of aluminum or the like.

In order to manufacture a positive electrode or a negative electrode, an electrode mixture including an electrode active material is applied on an electrode current collector made of a long metal sheet in one direction.

A separator is positioned between a positive electrode and a negative electrode of a battery to insulate the positive electrode and the negative electrode and maintain an electrolyte to provide a passage for ion conduction.

Such a secondary battery is a rechargeable battery that is manufactured using a material in which a redox process between a current and the material is repeated multiple times. When a reduction reaction is performed on the material by the current, power is charged. Also, when an oxidation reaction is performed on the material, power is discharged. Such charging/discharging is repeatedly performed to generate electricity.

Meanwhile, unlike a prismatic or pouch type secondary battery, when a cylindrical secondary battery is repeatedly charged and discharged, there is a high possibility of distortion of a positive electrode tab of the battery, which may negatively affect a lifetime of the battery.

As described above, when a battery continues to be charged and discharged, an internal structure of the battery is imbalanced due to distortion of a positive electrode tab and causes disconnection of an electrode tab, non-uniform internal expansion, or the like, which may cause rapid degradation or combustion of the battery.

In order to solve these problems occurring in a cylindrical secondary battery, there is a need to develop a cylindrical secondary battery in which positions of a positive electrode tab and a negative electrode tab are set based on a horizontal cross section of a wound electrode assembly to maintain internal uniformity of the secondary battery and concurrently prevent deformation of the secondary battery due to charging/discharging, thereby securing stability.

JP H11 345626 discloses a sealed battery.

### [Disclosure]

### [Technical Problem]

An object of the present invention is to provide a cylindrical secondary battery in which positions of a positive electrode tab and a negative electrode tab of a jelly-roll type electrode assembly are specified to prevent distortion of the positive electrode tab due to charging and discharging and implement a uniform internal structure of a secondary battery and a method of manufacturing the same.

### [Technical Solution]

The present invention provides a cylindrical secondary battery. The cylindrical secondary battery includes a jelly-roll type electrode assembly, a cylindrical case, and a positive electrode tab and a negative electrode tab which are coupled to the jelly-roll type electrode assembly, wherein, when a horizontal cross section perpendicular to a winding core of the jelly-roll type electrode assembly is divided into quadrants, the cylindrical secondary battery has a structure in which the positive electrode tab and the negative electrode tab are positioned in the same quadrant. The cylindrical secondary battery according to the present invention has a structure in which, on the horizontal cross section of the jelly-roll type electrode assembly, a first radial line from a winding core to the positive electrode tab and a second radial line from the winding core to the negative electrode tab are positioned in the same quadrant among the divided quadrants and are positioned to not be collinear with each other.

In another specific example, the cylindrical secondary battery according to the present invention may have a structure in which, on the horizontal cross section of the jelly-roll type electrode assembly, a first radial line from a winding core to the positive electrode tab and a second radial line from the winding core to the negative electrode tab are positioned in the same quadrant among the divided quadrants and form an angle ranging from 15° to 80°.

In an example, when an average radius value is calculated for each of the four divided quadrants and the radius average values between the quadrants are compared with each other, a deviation between the radius average values may be 1% or less.

In this case, a deviation between an average radius value of the quadrant in which the positive electrode tab and the negative electrode tab are positioned and an average radius value of quadrants adjacent to the quadrant in which the positive electrode tab and the negative electrode tab are positioned may be 1% or less.

In another example, the cylindrical secondary battery according to the present invention may further include an electrode lead electrically connected to the positive electrode tab or the negative electrode tab through binding or welding.

In addition, the present invention provides a method of manufacturing a cylindrical secondary battery. The method of manufacturing a cylindrical secondary battery according to the present invention includes manufacturing a jelly-roll type electrode assembly in which, when a horizontal cross section perpendicular to a winding core is divided into quadrants, a positive electrode tab and a negative electrode tab are disposed in the same quadrant, and inserting the jelly-roll type electrode assembly into a cylindrical battery case and injecting an electrolyte solution into the cylindrical battery case. The manufacturing of the jelly-roll type electrode assembly includes arranging a first radial line from a winding core to the positive electrode tab and a second radial line from the winding core to the negative electrode tab to be positioned in the same quadrant among the divided quadrants and to not be collinear with each other on the horizontal cross section of the jelly-roll type electrode assembly.

In a specific example, the arranging of the first radial line and the second radial line to not be collinear with each other may include calculating a predicted circumference of the jelly-roll type electrode assembly according to a number of windings according to Equation 1 below, and selecting a position of the negative electrode tab from the calculated predicted circumference. [Equation 1] ${a}_{n} = {a}_{n - 1} + 2 b$

In Equation 1,
aₙmay denote a diameter of the jelly-roll type electrode assembly for each corresponding number of windings,
aₙ₋₁may denote a diameter of the jelly-roll type electrode assembly for each previous number of windings,
b may denote a thickness of a repeating layer that increases at a corresponding number of windings,
n may be an integer greater than or equal to 1 and may denote the number of windings of the jelly-roll type electrode assembly, and
when n is 1, a₀ may denote a diameter of the winding core.

In another specific example, the selecting of the position of the negative electrode tab may include positioning the positive electrode tab before winding the jelly-roll type electrode assembly and positioning the negative electrode tab to be spaced apart from the positive electrode tab as much as a distance calculated by Equation 2 below. [Equation 2] ${L}_{n} = {\sum }_{k = 1}^{n} \left({a}_{k}\right) π ,$

In Equation 2,
Lₙ may denote a separation distance between the positive electrode tab and the negative electrode tab on the unwound jelly-roll type electrode assembly when the first radial line and the second radial line are positioned to be collinear with each other,
aₖ may denote a diameter of the wound jelly-roll type electrode assembly, and
n may be an integer equal to or greater than 1 and may denote the number of windings of the jelly-roll type electrode assembly.

In another example, the selecting of the position of the negative electrode tab may include positioning the positive electrode tab at a start point at which the j elly-roll type electrode assembly is wound and positioning the negative electrode tab to be spaced apart from the positive electrode tab as much as the distance calculated by Equation 2.

### [Advantageous Effects]

In a cylindrical secondary battery according to the present invention, positions of positive and negative electrode tabs attached to an electrode assembly are specified to control a jelly-roll type electrode assembly to have a uniform diameter, thereby preventing distortion of the positive electrode tab and non-uniform volume expansion inside a secondary battery due to charging and discharging to maintain structural stability. In addition, through a method of manufacturing a cylindrical secondary battery according to the present invention, a predicted circumference is calculated, and thereby a position of a negative electrode tab is selected such that a positive electrode tab does not overlap the negative electrode tab.

### [Brief Description of the Drawings]

FIG. 1 is a graph showing an average radius value for each region of a jelly-roll type electrode assembly according to Example 1.
FIG. 2 is a graph showing an average radius value for each region of a jelly-roll type electrode assembly according to Example 2.
FIG. 3 is a graph showing an average radius value for each region of a jelly-roll type electrode assembly according to Example 3.
FIG. 4 is a graph showing an average radius value for each region of a jelly-roll type electrode assembly according to Example 4.
FIG. 5 is a graph showing an average radius value for each region of a jelly-roll type electrode assembly according to Comparative Example 1.
FIG. 6 is a graph showing an average radius value for each region of a jelly-roll type electrode assembly according to Comparative Example 2.
FIG. 7 is a graph showing an average radius value for each region of a jelly-roll type electrode assembly according to Comparative Example 3.
FIG. 8 shows images captured by photographing a side surface of a cylindrical secondary battery using the jelly-roll type electrode assembly according to Example 3 through computed tomography (CT).
FIG. 9 shows images obtained by photographing a side surface of a cylindrical secondary battery using the jelly-roll type electrode assembly according to Comparative Example 2 through CT.
FIG. 10 shows vertical CT images captured by vertically photographing the cylindrical secondary battery using the jelly-roll type electrode assembly according to Example 3 through CT.
FIG. 11 shows images captured by vertically photographing the cylindrical secondary battery using the jelly-roll type electrode assembly according to Comparative Example 2 through CT.

### [Detailed Description of the Preferred Embodiments]

While the present invention is open to various modifications and alternative embodiments, specific embodiments thereof will be described and illustrated by way of example in the accompanying drawings. The invention is set out in the appended claims.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" another portion but also the case where still another portion is interposed therebetween. On the other hand, when a portion such as a layer, a film, an area, a plate, etc. is referred to as being "under" another portion, this includes not only the case where the portion is "directly under" another portion but also the case where still another portion is interposed therebetween. In addition, to be disposed "on" in the present application may include the case of being disposed at the bottom as well as the top.

Hereinafter, the present invention will be described in detail.

The present invention provides a cylindrical secondary battery and a method of manufacturing the same.

A typical cylindrical secondary battery includes a jelly-roll type electrode assembly, a cylindrical case, and one positive electrode tab and one negative electrode tab which are coupled to the jelly-roll type electrode assembly. In this case, the cylindrical secondary battery is manufactured by positioning the positive electrode tab and the negative electrode tab to be attached to a positive electrode and a negative electrode, respectively, according to a purpose of use, inserting the jelly-roll type electrode assembly to which the positive electrode tab and the negative electrode tab are attached into the cylindrical case, and injecting an electrolyte into the cylindrical case to then seal the cylindrical case. Unlike the internal structure of the secondary battery, as the cylindrical secondary battery manufactured in this way is repeatedly charged and discharged, there are problems in that distortion of the positive electrode tab occurs, and the wound electrode assembly inside the secondary battery non-uniformly expands. As such, when internal uniformity is disrupted, the positive electrode tab may be disconnected, and a lifetime of the secondary battery may be rapidly degraded. Thus, in order to solve the above problems, in the present invention, when a horizontal cross section of a wound electrode assembly is divided into quadrants, the wound electrode assembly has a structure in which a positive electrode tab and a negative electrode tab are disposed in the same quadrant. Positions of the positive electrode tab and the negative electrode tab are specified to prevent distortion of a positive electrode due to charging and discharging of a secondary battery and increase internal expansion uniformity, thereby improving structural stability.

Hereinafter, a cylindrical secondary battery according to the present invention will be described in detail.

In one embodiment, the cylindrical secondary battery according to the present invention is a cylindrical secondary battery including a jelly-roll type electrode assembly, a cylindrical case, and a positive electrode tab and a negative electrode tab which are coupled to the jelly-roll type electrode assembly. The cylindrical secondary battery may have a structure in which, when a horizontal cross section perpendicular to a winding core of the jelly-roll type electrode assembly is divided into quadrants, the positive electrode tab and the negative electrode tab are positioned in the same quadrant.

In general, a positive electrode tab coupled to a jelly-roll type electrode assembly may be disposed to protrude from any one surface of horizontal cross sections of the jelly-roll type electrode assembly. In addition, a negative electrode tab may be disposed to protrude from a horizontal cross section opposite to the horizontal cross section in which the positive electrode tab is disposed. In this case, when the horizontal cross section of the jelly-roll type electrode assembly is divided into quadrants, the positive electrode tab and the negative electrode tab are disposed in the same quadrant.

As described above, when a positive electrode tab and a negative electrode tab are disposed in the same quadrant, a deviation between average radius values of divided quadrants may be less than that when the positive electrode tab and the negative electrode tab are disposed in different quadrants. That is, a jelly-roll type electrode assembly in which a positive electrode tab and a negative electrode tab are disposed in the same quadrant may have a more uniform diameter as compared with a jelly-roll type electrode assembly in which a positive electrode tab and a negative electrode tab are disposed in different quadrants. Therefore, in a cylindrical secondary battery using a jelly-roll type electrode assembly having a uniform diameter, distortion of a positive electrode tab due to continuous charging and discharging is suppressed, and non-uniform internal expansion of the j elly-roll type electrode assembly inside the cylindrical secondary battery is minimized, thereby improving internal structural stability of the cylindrical secondary battery.

Meanwhile, the secondary battery according to the present invention has a structure in which, on the horizontal cross section of the j elly-roll type electrode assembly, a first radial line from a winding core to the positive electrode tab and a second radial line from the winding core to the negative electrode tab are positioned in the same quadrant among the divided quadrants and are positioned to not be collinear with each other.

Specifically, a case in which the first radial line and the second radial line are positioned to be collinear with each other is a case in which the positive electrode tab and the negative electrode tab are positioned to be collinear with each other. When a positive electrode tab and a negative electrode tab are disposed to overlap each other on one line, an electrode assembly, which has a quadrant in which the positive electrode tab and the negative electrode tab are positioned, becomes excessively thick. As a result, an overall deviation between a maximum radius value and a minimum radius value of a j elly-roll type electrode assembly increases.

In another example, the secondary battery according to the present invention may have a structure in which, on the horizontal cross section of the jelly-roll type electrode assembly, the first radial line from the winding core to the positive electrode tab and the second radial line from the winding core to the negative electrode tab are positioned in the same quadrant among the divided quadrants and form an angle ranging from 15° to 80°. Specifically, an angle between the first radial line and the second radial line ranges from 20° to 80°, from 20° to 60°, or from 18° to 45°.

The secondary battery may have a structure in which, on the horizontal cross section of the jelly-roll type electrode assembly, the first radial line from the winding core to the positive electrode tab and the second radial line from the winding core to the negative electrode tab are positioned in the same quadrant among the divided quadrants and form an angle ranging from 15° to 80°.

Specifically, when the first radial line and the second radial line are positioned in the same quadrant, a maximum angle between the first radial line and the second radial line is 90°, and a minimum angle therebetween is 0°, which may correspond to a case in which the first radial line and the second radial line overlap each other. In this case, in the case of the jelly-roll type electrode assembly in which the first radial line and the second radial line form an angle of 15° to 80°, a deviation between the maximum radius value and the minimum radius value of the jelly-roll type electrode assembly is reduced to form a uniform thickness of the electrode assembly, thereby preventing distortion of the positive electrode tab and non-uniform expansion inside the electrode assembly even when continuous charging and discharging are performed in the future. On the other hand, when an angle between the first radial line and the second radial line is too small, the first radial line and the second radial line are too close to each other. Thus, a deviation between an average radius value of the quadrant in which the first and second radial lines are positioned and an average radius value of other quadrants may increase.

In addition, even when the angle between the first radial line and the second radial line exceeds a certain range, the deviation between the average radius value of the quadrant in which the first and second radial lines are positioned and the average radius value of other quadrants may increase.

In another example, in the cylindrical secondary battery according to the present invention, when an average radius value is calculated for each of four divided quadrants, and the radius average values of the quadrants are compared with each other, a deviation therebetween may be 1% or less. Specifically, the deviation may be in a range of greater than 0% and less than or equal to 1%, in a range of 0.01% to 0.8%, or in a range of 0.5% to 0.8%. In this case, a thickness difference between the quadrants of the jelly-roll type electrode assembly can be reduced to obtain a uniform diameter, thereby improving uniformity of an internal structure of the cylindrical secondary battery. When the deviation exceeds a certain level, since the thickness difference between the quadrants of the jelly-roll type electrode assembly increases, it is impossible to prevent non-uniform expansion inside the cylindrical secondary battery and distortion of the positive electrode tab due to charging and discharging in the future.

In addition, in the cylindrical secondary battery according to the present invention, a deviation between an average radius value of the quadrant in which the positive electrode tab and the negative electrode tab are positioned and an average radius value of quadrants adjacent to the quadrant in which the positive electrode tab and the negative electrode tab are positioned may be 1% or less. Specifically, the deviation may be in a range of greater than 0% and less than or equal to 1%, in a range of 0.01% to 0.8%, or in a range of 0.5% to 0.8%. Such a case is most preferable because a uniform diameter can be obtained by minimizing a thickness difference between the quadrants of the jelly-roll type electrode assembly. Meanwhile, the adjacent quadrants are quadrants that are adjacent to each other in a left-right direction. Meanwhile, the adjacent quadrants may have an increased radius due to an influence of the quadrant in which the positive electrode tab and the negative electrode tab are positioned. Accordingly, when the deviation between the average radius value of the quadrant in which the positive electrode tab and the negative electrode tab are positioned and the average radius value of the quadrants adj acent thereto is within the above range, it is possible to solve non-uniformity inside the battery by minimizing the deviation between the average radius values of the adjacent quadrants and the quadrant in which the positive electrode tab and the negative electrode tab are positioned, and it is possible to secure structural stability of the battery due to charging and discharging in the future.

Also, a deviation between a maximum radius value and a minimum radius value of the quadrant in which the positive electrode tab and the negative electrode tab are positioned may be 1% or less. This is because, as a deviation of a radius value in the quadrant in which the positive electrode tab and the negative electrode tab are positioned decreases, a deviation of an average radius value for each quadrant decreases. That is, when the deviation between the maximum radius value and the minimum radius value of the quadrant in which the positive electrode tab and the negative electrode tab are positioned is within the above range, since the jelly-roll type electrode assembly can be wound while maintaining a uniform diameter, an intended purpose can be achieved.

Meanwhile, the cylindrical secondary battery according to the present invention may further include an electrode lead electrically connected to the positive electrode tab or the negative electrode tab through binding or welding. A method of coupling the electrode lead to the positive electrode tab or the negative electrode tab may be any one of conventional binding or welding methods that may be generally used by a person having ordinary skill in the art and is not limited to a particular process method.

Meanwhile, in the cylindrical secondary battery according to the present invention, the electrode assembly includes a positive electrode, a negative electrode, and a separator interposed between the positive electrode and the negative electrode, and the positive electrode and the negative electrode may each include an active material layer on one surface or both surfaces.

Hereinafter, a configuration of a cylindrical secondary battery of the present invention will be described.

The secondary battery includes an electrode assembly, and the electrode assembly has a structure in which a negative electrode and a positive electrode are alternately stacked with a separator interposed between the electrodes and are impregnated with a lithium salt-containing non-aqueous electrolyte. The electrode for a secondary battery may be manufactured by applying an electrode mixture including an electrode active material on a current collector and then drying the electrode mixture. If necessary, the electrode mixture may optionally further include a binder, a conductive material, a filler, and the like.

In the present invention, a positive electrode current collector is generally formed to have a thickness of 3 µm to 500 µm. A material of the positive electrode current collector is not particularly limited as long as the material has high conductivity without causing a chemical change in a battery, and for example, stainless steel, aluminum, nickel, titanium, or calcined carbon, or copper or stainless steel surface-treated with carbon, nickel, titanium, or silver may be used. A fine unevenness may be formed on a surface of a current collector to increase adhesion of a positive electrode active material, and the current collector may have any of various forms such as a film, a sheet, a foil, a net, a porous body, a foam body, a non-woven fabric body, and the like.

A sheet for a negative electrode current collector is generally formed to have a thickness of 3 µm to 500 µm. A material of the negative electrode current collector is not particularly limited as long as the material has high conductivity without causing a chemical change in a battery, and for example, copper, stainless steel, aluminum, nickel, titanium, or calcined carbon, or copper or stainless steel surface-treated with carbon, nickel, titanium, or silver, or an aluminum-cadmium alloy may be used. In addition, like the positive electrode current collector, a fine unevenness may be formed on a surface of the negative electrode current collector to increase a bonding force of a negative electrode active material, and the negative electrode current collector may be used in any of various forms such as a film, a sheet, a foil, a net, a porous body, a foam body, a non-woven fabric body, and the like.

In the present invention, the positive electrode active material is a material capable of causing an electrochemical reaction, is a lithium transition metal oxide, and includes two or more transition metals. Examples thereof include a layered compound such as lithium cobalt oxide (LiCoO₂) or lithium nickel oxide (LiNiO₂) substituted with one or more transition metals, lithium manganese oxide substituted with one or more transition metals, a lithium nickel-based oxide represented by a formula of LiNi_{1-y}M_{y}O₂ (wherein M is Co, Mn, Al, Cu, Fe, Mg, B, Cr, Zn, or Ga and includes at least one selected from among the above elements, and 0.01≤y≤0.7), a lithium nickel cobalt manganese composite oxide represented by a formula of Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂ or Li_{1+z}Ni_{0.4}Mn_{0.4}Co_{0.2}O₂ (wherein -0.5≤z≤0.5, 0.1≤b≤0.8, 0.1≤c≤0.8, 0≤d≤0.2, 0≤e≤0.2, b+c+d<1, M is Al, Mg, Cr, Ti, Si, or Y, and A is F, P, or Cl), and an olivine-based lithium metal phosphate represented by a formula of Li₁₊ₓM_{1-y}M'_{y}PO_{4-z}X_{z} (wherein M is a transition metal and is preferably Fe, Mn, Co, or Ni, M' is Al, Mg, or Ti, X is F, S, or N, -0.5≤x≤0.5, 0≤y≤0.5, and 0≤z≤0.1), but the present invention is not limited thereto.

Examples of the negative electrode active material include carbon such as non-graphitized carbon or graphite-based carbon, a metal complex oxide such as LiₓFe₂O₃ (0≤x≤1), LixWO₂(0≤x≤1), or SnₓMe₁₋ₓMe'_{y}O_{z} (wherein Me is Mn, Fe, Pb, or Ge, Me' is Al, B, P, Si, a Group 1, 2 or 3 element in the Periodic Table, or a halogen, 0<x≤1, 1≤y≤3, and 1≤z≤8), a lithium metal, a lithium alloy, a silicon-based alloy, a tin-based alloy, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅, a conductive polymer such as polyacetylene, and a Li-Co-Ni-based material.

The conductive material is typically added in an amount of 1 wt% to 30 wt% based on the total weight of a mixture including the positive electrode active material. The conductive material is not particularly limited as long as the conductive material has high conductivity without causing a chemical change in a battery. Examples of the conductive material may include graphite such as natural graphite or synthetic graphite, carbon black such as carbon black, acetylene black, Ketjen black, channel black, furnace black, lamp black, or thermal black, a conductive fiber such as a carbon fiber or a metal fiber, a metal powder such as a carbon fluoride powder, an aluminum powder, or a nickel powder, conductive whiskey such as zinc oxide or potassium titanate, a conductive metal oxide such as titanium oxide, and a conductive material such as a polyphenylene derivative.

The binder may be a component for assisting with binding between a conductive material, an active material, and a current collector and may be typically included in an amount of 1 wt % to 30 wt % based on the total weight of a mixture including the negative electrode active material. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), sulfonated-EPDM, styrene-butadiene rubber, fluorine rubber, and various polymers.

The filler is a component for controlling the expansion of an electrode and is selectively used. The filler is not particularly limited as long as the filler is a fibrous material that does not cause a chemical change in a battery. Examples of the filer may include an olefin-based polymer such as polyethylene or polypropylene, and a fibrous material such as a glass fiber or a carbon fiber.

Other components such as a viscosity modifier and an adhesion promoter may be added optionally or in a combination of two or more. The viscosity modifier is a component for adjusting the viscosity of an electrode mixture to facilitate mixing of the electrode mixture and coating thereof on a current collector and may be added up to 30 wt% based on the total weight of a negative electrode mixture. Examples of the viscosity modifier include carboxymethylcellulose, polyvinylidene fluoride, and the like, but the present invention is not limited thereto. In some cases, a solvent may also serve as the viscosity modifier.

The adhesion promoter is an auxiliary component added to enhance adhesion between an active material and a current collector and may be added in an amount of 10 wt % or less based on an amount of the binder. Examples of the adhesion promoter may include oxalic acid, adipic acid, formic acid, an acrylic acid derivative, and an itaconic acid derivative.

The separator is interposed between the positive electrode and the negative electrode, and an insulating ultra-thin film having high ion permeability and high mechanical strength is used. A pore diameter of the separator is generally in a range of 0.01 µm to 10 µm, and a thickness thereof is generally in a range of 5 µm to 300 µm. As the separator, for example, a sheet or non-woven fabric made of an olefin-based polymer such as polypropylene or a glass fiber or polyethylene, which has chemical resistance and hydrophobicity, is used.

The lithium salt-containing non-aqueous electrolyte includes an electrolyte and a lithium salt. As the electrolyte, a non-aqueous organic solvent, an organic solid electrolyte, an inorganic solid electrolyte, or the like is used.

Examples of the non-aqueous organic solvent may include an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate.

Examples of the organic solid electrolyte may include a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, and a polymer including an ionic dissociation group.

Examples of the inorganic solid electrolyte may include nitrides, halides, and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the non-aqueous electrolyte. Examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, and imide.

In addition, in order to improve charge/discharge characteristics and flame retardancy, for example, pyridine, triethylphosphite, triethanolamine, cyclic ether, ethylenediamine, n-glyme, hexaphosphoric triamide, a nitrobenzene derivative, sulfur, quinone imine dye, N-substituted oxazolidinone, N,N-substituted imidazolidine, an ethylene glycol dialkyl ether, an ammonium salt, pyrrole, 2-methoxy ethanol, aluminum trichloride, or the like may be added to the electrolyte. In some cases, in order to impart incombustibility, the electrolyte may further include a halogen-containing solvent such as carbon tetrachloride or ethylene trifluoride. In addition, in order to improve high-temperature storage characteristics, the electrolyte may further include carbon dioxide gas, fluoro-ethylene carbonate (FEC), propene sultone (PRS), fluoro-propylene carbonate (FPC), or the like.

In an exemplary example, a lithium salt such as LiPF₆, LiClO₄, LiBF₄, or LiN(SO₂CF₃)₂ is added to a mixed solvent of a cyclic carbonate of ethylene carbonate (EC) or propylene carbonate (PC) which is a high-dielectric solvent and a linear carbonate of diethyl carbonate (DEC), dimethyl carbonate (DMC), or ethyl methyl carbonate (EMC) which is a low viscosity solvent, thereby preparing the lithium salt-containing non-aqueous electrolyte.

In addition, the present invention provides a method of manufacturing a cylindrical secondary battery.

Meanwhile, the method of manufacturing a cylindrical secondary battery may include content overlapping that of the above-described cylindrical secondary battery, and redundant description will be omitted.

In an example, the method of manufacturing a cylindrical secondary battery according to the present invention may include manufacturing a jelly-roll type electrode assembly in which, when a horizontal cross section perpendicular to a winding core is divided into quadrants, a positive electrode tab and a negative electrode tab are disposed in the same quadrant, inserting the jelly-roll type electrode assembly into a cylindrical battery case, and injecting an electrolyte solution into the cylindrical battery case.

The manufacturing of the jelly-roll type electrode assembly includes arranging a first radial line from a winding core to the positive electrode tab and a second radial line from the winding core to the negative electrode tab to be positioned in the same quadrant among the divided quadrants and to not be collinear with each other on the horizontal cross section of the jelly-roll type electrode assembly. As described above, when the first radial line and the second radial line are positioned to be collinear with each other, due to thicknesses of the positive electrode tab positioned on the first radial line and the negative electrode tab positioned on the second radial line, an average radius value of the same quadrant in which the positive electrode table and the negative electrode tab are positioned is excessively increased as compared with a quadrant in which the positive electrode tab and the negative electrode tab are not positioned, and thus non-uniformity of an inner diameter of the jelly-roll type electrode assembly increases. Accordingly, it is not possible to solve a problem to be solved in the present invention, that is, a problem in which non-uniform expansion inside the electrode assembly and distortion of a central axis of the positive electrode tab of the cylindrical secondary battery occur due to charging and discharging. Accordingly, the present invention is characterized in that the positive electrode tab and the negative electrode tab are disposed to not be collinear with each other even when positioned in the same quadrant.

In another example, in the method of manufacturing a cylindrical secondary battery according to the present invention, the arranging of the first radial line and the second radial line to not be collinear with each other may include calculating a predicted circumference of the jelly-roll type electrode assembly according to the number of windings according to Equation 1 below and selecting a position of the negative electrode tab from the calculated predicted circumference. [Equation 1] ${a}_{n} = {a}_{n - 1} + 2 b$

In Equation 1, aₙ denotes a diameter of the jelly-roll type electrode assembly for each corresponding number of windings, aₙ₋₁ denotes a diameter of the jelly-roll type electrode assembly for each previous number of windings, b denotes a thickness of a repeating layer that increases at a corresponding number of windings, n is an integer greater than or equal to 1 and denotes the number of windings of the electrode assembly, and when n is 1, a₀ denotes a diameter of the winding core.

The repeating layer includes a positive electrode, a negative electrode, and a separator interposed between the positive electrode and the negative electrode, and each of the positive electrode and the negative electrode may include an active material layer on one surface or both surfaces. In this case, a configuration of the repeating layer may be set in various ways according to manufacturing conditions and thus may be appropriately changed.

For example, the circumference may be a circumference formed using a point at which the first radial line is positioned as a start point and a regression point. On the other hand, the start point and the regression point are the same one point and may be any arbitrary point.

The diameter may be calculated by applying an arithmetic sequence to a diameter formed by adding a diameter of a repeating layer to an initial core diameter, and the predicted circumference can be calculated from the calculated diameter.

In a specific example, when there is no repeating layer, that is, when the electrode assembly is not wound, the diameter may be a diameter of the winding core. When there is one repeating layer, that is, when the jelly-roll type electrode assembly surrounding the winding core is wound once, the predicted circumference may be calculated using a diameter calculated by adding a diameter of the winding core to a value obtained by multiplying a thickness of the repeating layer by the integer 2. In addition, when there are two repeating layers, that is, when the jelly-roll type electrode assembly surrounding the winding core is wound twice, the predicted circumference may be calculated using a diameter calculated by adding the diameter calculated when there is one repeating layer to a value obtained by multiplying a thickness of the repeating layer by the integer 2. The position of the negative electrode tab may be selected from the predicted circumference calculated in this way.

In another example, the selecting of the position of the negative electrode tab may include positioning the positive electrode tab before winding the electrode assembly and positioning the negative electrode tab to be spaced apart from the positive electrode tab as much as a distance calculated by Equation 2 below. [Equation 2] ${L}_{n} = {\sum }_{k = 1}^{n} \left({a}_{k}\right) π$

In Equation 2, Lₙ denotes a separation distance between the positive electrode tab and the negative electrode tab on the unwound jelly-roll type electrode assembly when the first radial line and the second radial line are positioned to be collinear with each other, aₖ denotes a diameter of the wound jelly-roll type electrode assembly, and n is an integer equal to or greater than 1 and denotes the number of windings of the electrode assembly.

In Equation 2, Lₙ denotes a distance between the positive electrode tab and the negative electrode tab of the unwound jelly-roll type electrode assembly when the first radial line and the second radial line are positioned to be collinear with each other with respect to the jelly-roll-type electrode assembly, the negative electrode tab may be disposed somewhere other than a position at which the positive electrode tab and the negative electrode tab are spaced apart from each other as much as the distance calculated by Equation 2 above.

As described above, through Equation 2, according to the number of windings, when the first radial line on which the positive electrode tab is positioned overlaps the second radial line on which the negative electrode tab is positioned, the distance between the positive electrode tab and the negative electrode tab on the unwound electrode assembly can be easily calculated. Therefore, it is possible to prevent the negative electrode tab from being disposed to be collinear with the positive electrode tab to overlap the positive electrode tab.

Thus, according to the present invention, the predicted circumference of the wound electrode assembly according to the number of windings in Equation 1 may be calculated, and based on the distance between the positive electrode tab and the negative electrode tab calculated through Equations 1 and 2, the positive electrode tab and the negative electrode tab are disposed in the same quadrant and are disposed to not be collinear with each other.
Therefore, in a cylindrical secondary battery using a jelly-roll type electrode assembly wound with a uniform thickness by minimizing a deviation between radius average values of quadrants divided based on a horizontal cross section perpendicular to a winding core, it is possible to prevent an internal imbalance of the cylindrical secondary battery and distortion of a central axis of a positive electrode tab due to charging and discharging.

### [Modes of the Invention]

Hereinafter, the present invention will be described in more detail with reference to the accompanying drawings. While the present invention is open to various modifications and alternative embodiments, specific embodiments thereof will be described and illustrated by way of example in the accompanying drawings.

### (Examples and Comparative Examples)

### <Manufacturing of jelly-roll type electrode assembly>

N-Methylpyrrolidone was injected into a homo mixer, and 97.8 parts by weight of LiNi_{0.6}CO_{0.2}Mn_{0.2}O₂ as a positive electrode active material, 0.7 parts by weight of carbon black as a conductive material, and 1.5 parts by weight of polyvinylidene fluoride (PVDF) as a binder were weighed and introduced based on 100 parts by weight of a solid content of a positive electrode slurry and mixed at 2,000 rpm for 60 minutes, thereby preparing a positive electrode slurry for a lithium secondary battery. The prepared positive electrode slurry was applied on both surfaces of an aluminum thin plate, dried, and then rolled to manufacture a positive electrode.

Meanwhile, 86 parts by weight of artificial graphite and 10 parts by weight of silicon (Si) particles as a negative electrode active material, 2 parts by weight of carbon black as a conductive material, and 2 parts by weight of styrene butadiene rubber (SBR) and carbonylmethyl cellulose (CMC) as a binder were weighed, introduced, and mixed at 2,000 rpm for 60 minutes, thereby preparing a negative electrode slurry for a lithium secondary battery. The negative electrode slurry was applied on both surfaces of a thin copper plate having an average thickness of 10 µm, dried, and then rolled to manufacture a negative electrode used in a jelly-roll type electrode assembly.

A porous polyethylene (PE) film having an average thickness of 20 µm was interposed between the manufactured positive electrode and negative electrode to manufacture a jelly-roll type electrode assembly.

Next, a positive electrode tab was disposed in an uncoated region of the positive electrode of the j elly-roll electrode assembly. When a horizontal cross section of the j elly-roll type electrode assembly was divided into quadrants, based on the placement of the hour hand on a clock, a 9 o'clock to 12 o'clock region was a first quadrant, a 12 o'clock to 3 o'clock region was a second quadrant, a 3 o'clock to 6 o'clock region was a third quadrant, and a 6 o'clock to 9 o' clock region was a fourth quadrant. In this case, the positive electrode tab was disposed on a center line of the first quadrant, and the negative electrode tab was disposed as shown in Examples and Comparative Examples in Table 1 below.

An angle between a first radial line and a second radial line in Table 1 below is an angle between the first radial line from a winding core to the positive electrode tab and the second radial line from the winding core to the negative electrode tab in a direction of the horizontal cross section of the jelly-roll type electrode assembly.

**[Table 1]**

| Classification | Position of negative electrode tab | Angle between first radial line and second radial line |
|---|---|---|
| Comparative Example 1 | First quadrant | 0° |
| Example 1 | First quadrant | 20° |
| Example 2 | First quadrant | 30° |
| Example 3 | First quadrant | 40° |
| Comparative Example 2 | Second quadrant | 90° |
| Comparative Example 3 | Third quadrant | 180° |
| Comparative Example 4 | Fourth quadrant | 90° |

### (Experimental Example)

In order to evaluate performance of a jelly-roll type electrode assembly of a cylindrical secondary battery according to the present invention, the following experiments were performed.

### <Calculation of diameter and deviation of jelly-roll type electrode assembly>

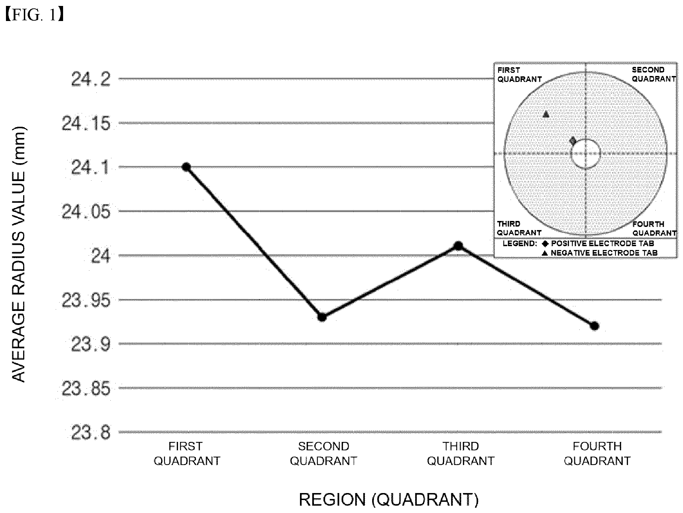

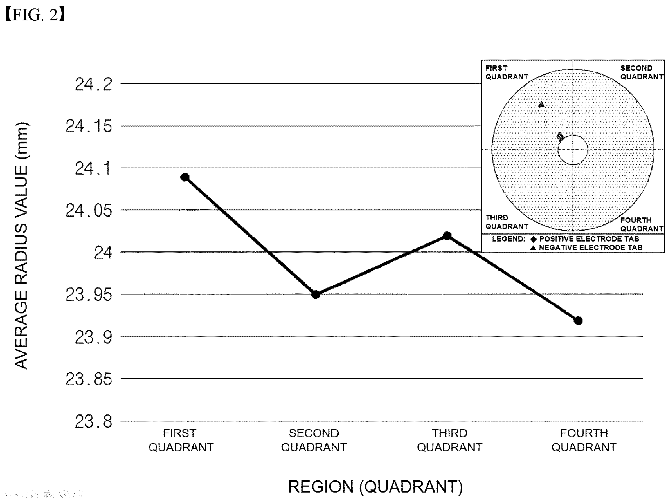

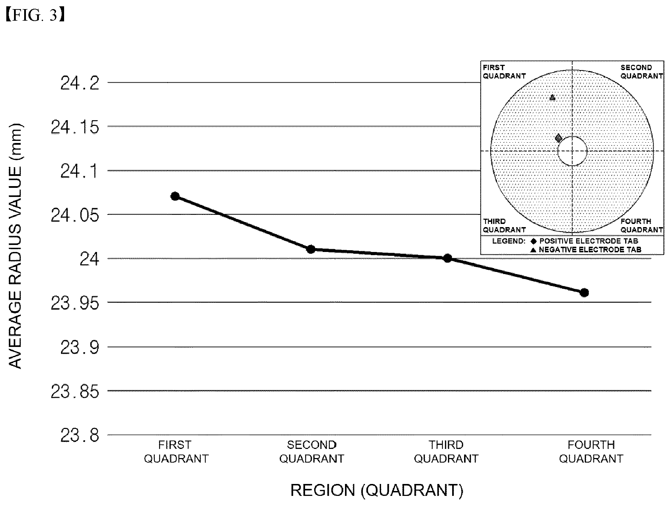

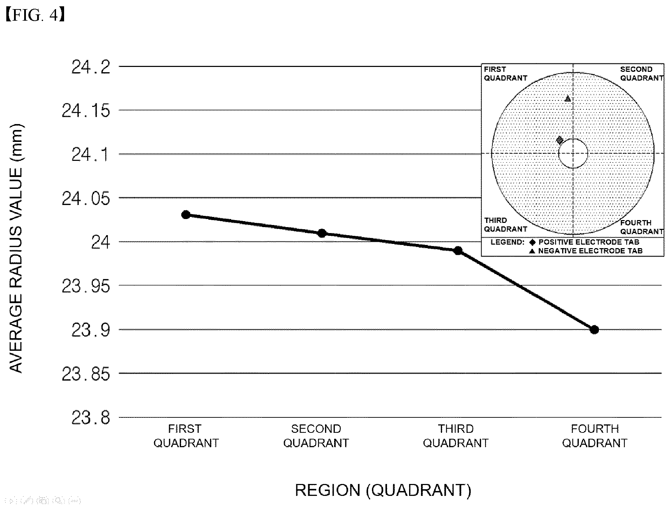

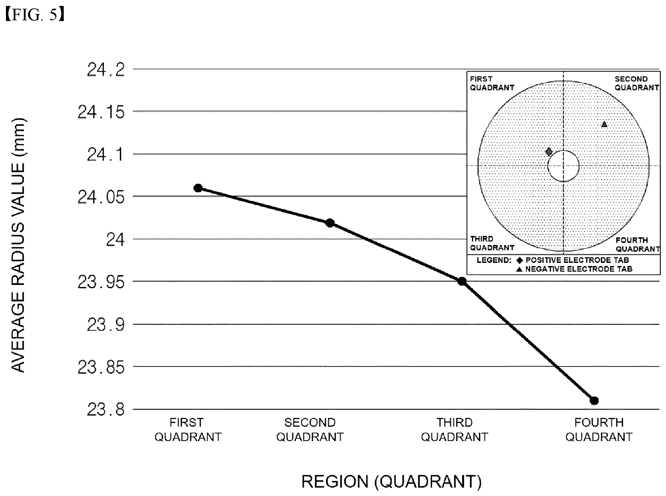

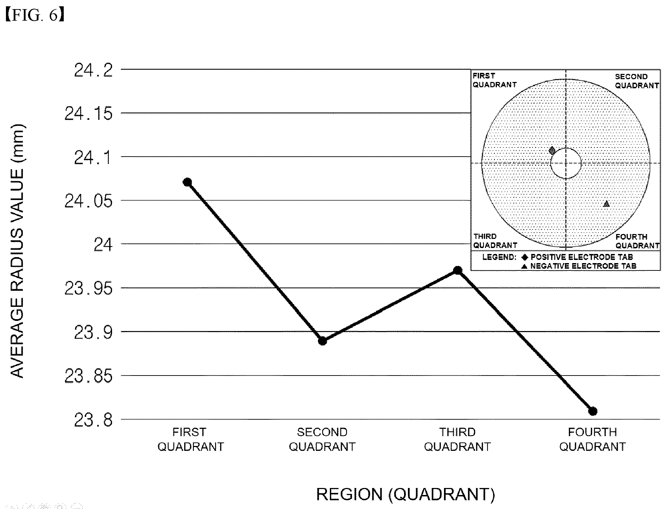

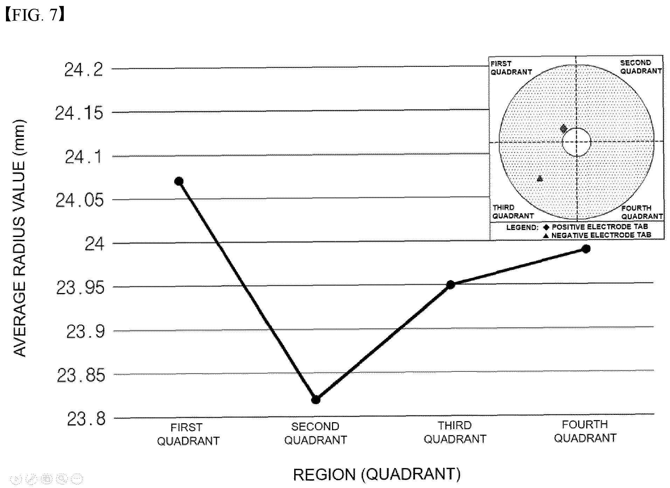

A jelly-roll type electrode assembly manufactured in each of Examples 1 to 3 and Comparative Examples 1 to 4 was wound, an average radius value between quadrants of the jelly-roll type electrode assembly according to a position of a negative electrode tab was calculated, and a deviation maximum value having the maximum value among the deviations between the radius average values of the quadrants was calculated. Results are shown in Table 2 and FIGS. 1 to 7 below.

**[Table 2]**

| Classification | Average radius value (mm) | | | | Deviation maximum value (%) |
|---|---|---|---|---|---|
| | First quadrant | Second quadrant | Third quadrant | Fourth quadrant | |
| Comparative Example 1 | 24.1 | 23.93 | 24.01 | 23.92 | 0.75 |
| Example 1 | 24.09 | 23.95 | 24.02 | 23.92 | 0.71 |
| Example 2 | 24.07 | 24.01 | 24 | 23.96 | 0.46 |
| Example 3 | 24.03 | 24.01 | 23.99 | 23.9 | 0.54 |
| Comparative Example 2 | 24.06 | 24.02 | 23.95 | 23.81 | 1.04 |
| Comparative Example 3 | 24.07 | 23.89 | 23.97 | 23.81 | 1.08 |
| Comparative Example 4 | 24.07 | 23.82 | 23.95 | 23.99 | 1.04 |

As shown in Table 2 and FIGS. 1 to 7, when the positive electrode tab and the negative electrode tab of Examples 1 to 3 were positioned in the same quadrant, the deviation maximum value having the maximum value among the deviations between the radius average values of the quadrants was smaller than that when the positive electrode tab and the negative electrode tab were positioned in different quadrants.

Meanwhile, Comparative Example 1 was a case in which the first radial line and the second radial line overlapped each other, and the maximum deviation value was the greatest among Examples 1 to 3.

In addition, in Example 2 among Examples 1 to 3, the maximum deviation value was the smallest. Thus, it can be confirmed that, even when the positive electrode tab and the negative electrode tab are positioned in the same quadrant, when the first radial line and the second radial line form an average angle of 30°, an inner diameter of the j elly-roll type electrode assembly is most uniformly formed.

On the other hand, in Comparative Examples 2 to 4 in which the positive electrode tab and the negative electrode tab were positioned in different quadrants, in the case of Comparative Example 3, the deviation maximum value was the greatest. Accordingly, it can be confirmed that, when the positive electrode tab and the negative electrode tab are disposed as in Comparative Example 3, an inner diameter of the jelly-roll type electrode assembly is most non-uniform.

### <Evaluation of internal disconnection>

The jelly-roll type electrode assembly manufactured in each of Examples 1 to 3 and Comparative Examples 1 to 4 was wound and inserted into a cylindrical case, an electrolyte was injected to manufacture a cylindrical secondary battery, and then internal disconnection was evaluated for each manufactured cylindrical secondary battery.

Specifically, each manufactured cylindrical secondary battery was charged and discharged 200 times in a constant current/constant voltage (CC/CV) mode and was disassembled to check whether a negative electrode provided in the secondary battery was disconnected. In this case, the charging was performed until a voltage reached 4.25 V at a constant current of 1 C, and the discharging was performed until a voltage reached 2.5 V at a constant current of 1 C. Results are shown in Table 3 below.

**[Table 3]**

| Classification | Occurrence of disconnection |
|---|---|
| Comparative | No |
| Example 1 | |
| Example 1 | No |
| Example 2 | No |
| Example 3 | No |
| Comparative Example 2 | No |
| Comparative Example 3 | Yes |
| Comparative Example 4 | No |

As shown in Table 3, in Examples 1 to 3 and Comparative Examples 1 and 4, the internal disconnection did not occur, and in Comparative Example 3, the internal disconnection occurred. Thus, in the case of Comparative Example 3, it can be confirmed that the internal disconnection occurred due to non-uniform expansion and deformation inside the electrode assembly.

### <Evaluation of charging and discharging lifetime>

The jelly-roll type electrode assembly manufactured in each of Examples 1 to 3 and Comparative Examples 1 to 4 was wound and inserted into a cylindrical case, an electrolyte was injected to manufacture a cylindrical secondary battery, and at a temperature of 45 °C, charging was performed until a voltage reached 4.23 V in a mode of a CC of 0.33 C. After that, discharging was performed until a voltage reached 2.5 V in a mode of a CC mode of 0.33 C, and then in a CV mode, discharging was additionally performed until a current value decreased to 0.05% of the initial current value to check discharge capacity of a first time.

After that, the same charging/discharging operation was performed 200 times, and discharge capacity measured the last time was divided by the discharge capacity of the first time to calculate a 0.33 C charge/discharge capacity retention rate. Calculation results obtained thereby are shown in Table 4 below.

**[Table 4]**

| Classification | Capacity retention rate (%) |
|---|---|
| Comparative Example 1 | 91.2 |
| Example 1 | 96.9 |
| Example 2 | 99.1 |
| Example 3 | 97.4 |
| Comparative Example 2 | 91.7 |
| Comparative Example 3 | 88.7 |
| Comparative Example 4 | 89.8 |

As shown in Table 4, in Examples 1 to 3, a capacity retention rate was higher than that of Comparative Examples 1 to 4. Thus, it can be seen that, when the positive electrode tab and the negative electrode tab are positioned in the same quadrant, a high capacity retention rate is exhibited. On the other hand, when the positive electrode tab and the negative electrode tab were placed to be collinear with each other as in Comparative Example 1, a capacity retention rate was rather low. In addition, among Comparative Examples 1 to 4, in the case of Comparative Example 3, the lowest capacity retention rate was exhibited.

From the above results, as in Examples 1 to 3, when the positive electrode tab and the negative electrode tab are positioned in the same quadrant and maintain a certain distance, it can be seen that the uniformity of an inner diameter of the j elly-roll type electrode assembly is improved to disperse stress generated at a peripheral portion and considerably reduce stress accumulated in the electrode assembly so that it is possible to prevent damage to the electrode due to continuous charging and discharging.

### <Evaluation of axis distortion of positive electrode tab>

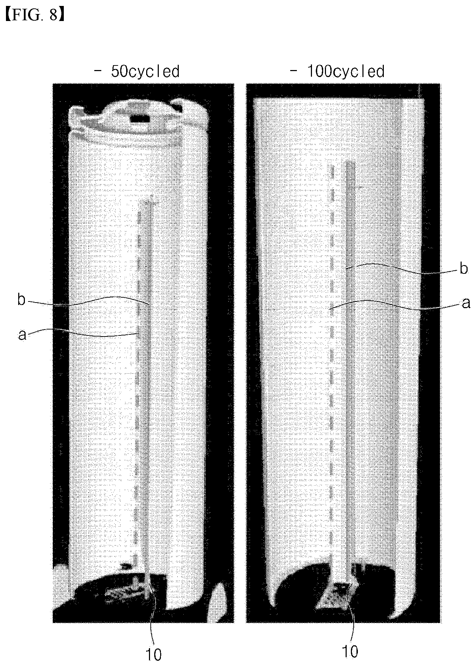

The jelly-roll type electrode assembly manufactured in each of Example 2 and Comparative Example 3 was wound and inserted into a cylindrical case, and an electrolyte was injected to manufacture a cylindrical secondary battery. After a charging and discharging operation was performed on each manufactured cylindrical secondary battery 50 times and 100 times, the cylindrical secondary battery was photographed through CT (computed tomography). Results are shown in FIGS. 8 to 11.

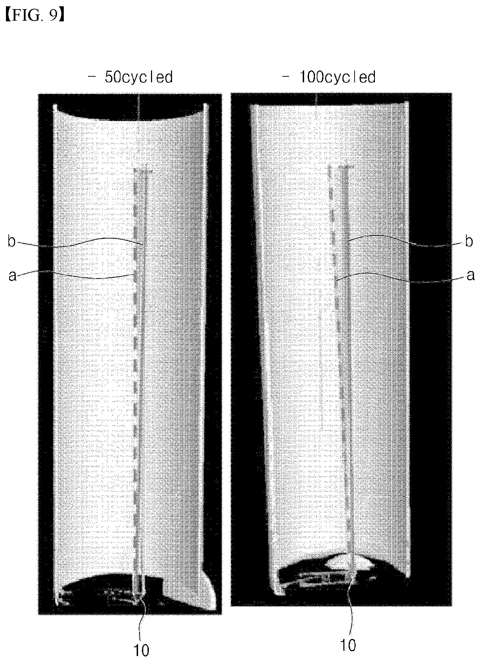

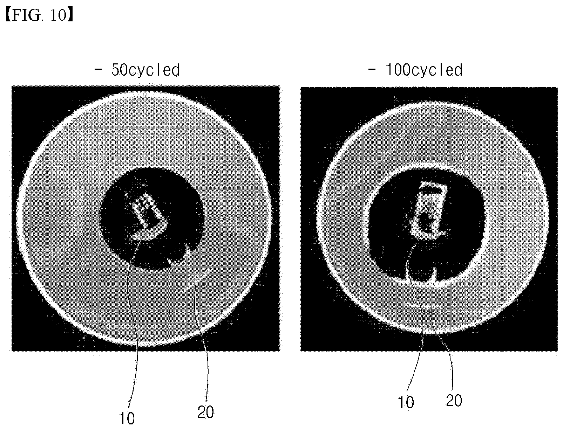

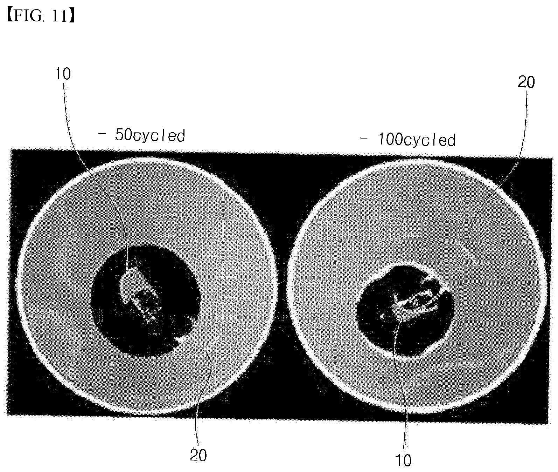

FIGS. 8 and 9 show a degree of inclination of a central axis a and a virtual axis b of a positive electrode tab of the cylindrical secondary batteries using the jelly-roll type electrode assemblies manufactured in Example 2 and Comparative Example 3. FIGS. 10 and 11 show a degree of inner expansion of the jelly-roll type electrode assemblies manufactured in Example 2 and Comparative Example 3 and a degree of distortion of a positive electrode tab.

Referring to FIG. 8, even when the cylindrical secondary battery was charged 50 times and 100 times, since the central axis a and the virtual axis b of a positive electrode tab 10 of the cylindrical secondary battery were parallel with each other, distortion of the positive electrode tab 10 did not occur. In addition, referring to FIG. 10, even after the cylindrical secondary battery was charged and discharged 50 times and 100 times, distortion of the positive electrode tab 10 and a negative electrode tab 20 did not occur. It could be confirmed that a degree of expansion inside the electrode assembly of the cylindrical secondary battery was relatively uniform as compared with that of FIG. 11.

Meanwhile, referring to FIG. 9, when the cylindrical secondary battery was charged and discharged 50 times, it could be confirmed that the virtual axis b of a positive electrode tab 10 was inclined with respect to the central axis a of the cylindrical secondary battery, and when the cylindrical secondary battery was charged and discharged 100 times, distortion of the positive electrode tab 10 occurred as seen from the fact that the virtual axis b of the positive electrode tab 10 was more inclined as compared with the central axis a of the cylindrical secondary battery. In addition, referring to FIG. 11, when the cylindrical secondary battery was charged and discharged 50 times and 100 times, distortion of a negative electrode tab 20 did not occur, but distortion of the positive electrode tab 10 occurred. It could be confirmed that a degree of expansion inside the electrode assembly of the cylindrical secondary battery was relatively considerably biased in one direction and non-uniform as compared with that of FIG. 9.

From the above results, when a cylindrical secondary battery according to the present invention is a secondary battery having a structure in which, when a horizontal cross section of a jelly-roll type electrode assembly is divided into quadrants, a positive electrode tab and a negative electrode tab are disposed in the same quadrant and satisfying a condition that a first radial line from a winding core toward the positive electrode tab and a second radial line toward the negative electrode tab not overlap each other, the cylindrical secondary battery has a structure that minimizes a deviation of an inner diameter of the electrode assembly. Even when the cylindrical secondary battery having such a structure is continuously charged and discharged, it can be seen that distortion of the positive electrode tab does not occur, and structural stability due to uniform internal expansion is improved, thereby maintaining high energy efficiency.

While exemplary embodiments of the present invention have been described with reference to the accompanying drawings, it will be understood by experts in the art or those of ordinary skill in the art that the present invention may be variously modified and changed without departing from the scope of the present invention as defined by the appended claims.

Therefore, the technical scope of the present invention should not be limited by the content described in the detailed description of the specification but should be defined by the claims.

### <Descriptions of Reference Numerals>

10: positive electrode tab
11: negative electrode tab

## Claims

1. A cylindrical secondary battery comprising:
a jelly-roll type electrode assembly;
a cylindrical case; and
a positive electrode tab (10) and a negative electrode tab (11) which are coupled to the jelly-roll type electrode assembly,
wherein, when a horizontal cross section perpendicular to a winding core of the jelly-roll type electrode assembly is divided into quadrants, the cylindrical secondary battery has a structure in which the positive electrode tab (10) and the negative electrode tab (11) are positioned in the same quadrant, **characterized in that**
the cylindrical secondary battery has a structure in which, on the horizontal cross section of the jelly-roll type electrode assembly, a first radial line from a winding core to the positive electrode tab (10) and a second radial line from the winding core to the negative electrode tab (11) are positioned in the same quadrant among the divided quadrants and are positioned to not be collinear with each other.

2. The cylindrical secondary battery of claim 1, wherein the cylindrical secondary battery has a structure in which, on the horizontal cross section of the j elly-roll type electrode assembly, a first radial line from a winding core to the positive electrode tab (10) and a second radial line from the winding core to the negative electrode tab (11) are positioned in the same quadrant among the divided quadrants and form an angle ranging from 15° to 80°.

3. The cylindrical secondary battery of claim 1, further comprising an electrode lead electrically connected to the positive electrode tab (10) or the negative electrode (11) tab through binding or welding.

4. A method of manufacturing a cylindrical secondary battery according to claim 1, the method comprising:
manufacturing a jelly-roll type electrode assembly in which, when a horizontal cross section perpendicular to a winding core is divided into quadrants, a positive electrode tab (10) and a negative electrode tab (11) are disposed in the same quadrant; and
inserting the jelly-roll type electrode assembly into a cylindrical battery case and injecting an electrolyte solution into the cylindrical battery case, **characterized in that** the manufacturing of the jelly-roll type electrode assembly includes arranging a first radial line from a winding core to the positive electrode tab (10) and a second radial line from the winding core to the negative electrode tab (11) to be positioned in the same quadrant among the divided quadrants and to not be collinear with each other on the horizontal cross section of the jelly-roll type electrode assembly.

5. The method of claim 4, wherein the arranging of the first radial line and the second radial line to not be collinear with each other includes:
calculating a predicted circumference of the jelly-roll type electrode assembly according to a number of windings according to Equation 1 below; and
selecting a position of the negative electrode tab (11) from the calculated predicted circumference: [Equation 1] ${a}_{n} = {a}_{n - 1} + 2 b ,$
wherein, in Equation 1,
aₙ denotes a diameter of the jelly-roll type electrode assembly for each corresponding number of windings;
aₙ₋₁ denotes a diameter of the jelly-roll type electrode assembly for each previous number of windings;
b denotes a thickness of a repeating layer that increases at a corresponding number of windings;
n is an integer greater than or equal to 1 and denotes the number of windings of the jelly-roll type electrode assembly; and
when n is 1, a₀ denotes a diameter of the winding core.

6. The method of claim 5, wherein the selecting of the position of the negative electrode tab (11) includes positioning the positive electrode tab (10) before winding the jelly-roll type electrode assembly and positioning the negative electrode tab (11) to be spaced apart from the positive electrode tab (10) as much as a distance calculated by Equation 2 below: [Equation 2] ${L}_{n} = {\sum }_{k = 1}^{n} \left({a}_{k}\right) π ,$ wherein, in Equation 2,
Lₙ denotes a separation distance between the positive electrode tab and the negative electrode tab on the unwound jelly-roll type electrode assembly when the first radial line and the second radial line are positioned to be collinear with each other;
aₖ denotes a diameter of the wound jelly-roll type electrode assembly; and
n is an integer equal to or greater than 1 and denotes the number of windings of the jelly-roll type electrode assembly.

7. The method of claim 6, wherein the selecting of the position of the negative electrode tab (11) includes positioning the positive electrode tab (10) at a start point at which the jelly-roll type electrode assembly is wound and positioning the negative electrode tab (11) to be spaced apart from the positive electrode tab (10) as much as the distance calculated by Equation 2.

## Patentansprüche

1. Zylindrische Sekundärbatterie, umfassend:
• eine Elektrodenanordnung vom Jelly-Roll-Typ;
• ein zylindrisches Gehäuse; und
• eine positive Elektrodenlasche (10) und eine negative Elektrodenlasche (11), die mit der Elektrodenanordnung vom Jelly-Roll-Typ gekoppelt sind,
wobei, wenn ein horizontaler Querschnitt senkrecht zu einem Wickelkern der Elektrodenanordnung vom Jelly-Roll-Typ in Quadranten unterteilt ist, die zylindrische Sekundärbatterie eine Struktur aufweist, bei der die positive Elektrodenlasche (10) und die negative Elektrodenlasche (11) im selben Quadranten positioniert sind, **dadurch gekennzeichnet, dass**
die zylindrische Sekundärbatterie eine Struktur aufweist, bei der auf dem horizontalen Querschnitt der Elektrodenanordnung vom Jelly-Roll-Typ eine erste Radiallinie von einem Wickelkern zu der positiven Elektrodenlasche (10) und eine zweite Radiallinie von dem Wickelkern zu der negativen Elektrodenlasche (11) im selben Quadranten unter den unterteilten Quadranten positioniert sind und so positioniert sind, dass sie nicht kollinear zueinander sind.

2. Zylindrische Sekundärbatterie nach Anspruch 1, wobei die zylindrische Sekundärbatterie eine Struktur aufweist, bei der auf dem horizontalen Querschnitt der Elektrodenanordnung vom Jelly-Roll-Typ eine erste Radiallinie von einem Wickelkern zu der positiven Elektrodenlasche (10) und eine zweite Radiallinie von dem Wickelkern zu der negativen Elektrodenlasche (11) im selben Quadranten unter den unterteilten Quadranten positioniert sind und einen Winkel im Bereich von 15° bis 80° bilden.

3. Zylindrische Sekundärbatterie nach Anspruch 1, ferner umfassend eine Elektrodenleitung, die über Bindung oder Schweißen mit der positiven Elektrodenlasche (10) oder der negativen Elektrodenlasche (11) elektrisch verbunden ist.

4. Verfahren zur Herstellung einer zylindrischen Sekundärbatterie nach Anspruch 1, wobei das Verfahren umfasst:
• Herstellen einer Elektrodenanordnung vom Jelly-Roll-Typ, bei der, wenn ein horizontaler Querschnitt senkrecht zu einem Wickelkern in Quadranten unterteilt wird, eine positive Elektrodenlasche (10) und eine negative Elektrodenlasche (11) im selben Quadranten angeordnet werden; und
• Einsetzen der Elektrodenanordnung vom Jelly-Roll-Typ in ein zylindrisches Batteriegehäuse und Einspritzen einer Elektrolytlösung in das zylindrische Batteriegehäuse, **dadurch gekennzeichnet, dass** das Herstellen der Elektrodenanordnung vom Jelly-Roll-Typ das Anordnen einer ersten Radiallinie von einem Wickelkern zu der positiven Elektrodenlasche (10) und einer zweiten Radiallinie von dem Wickelkern zu der negativen Elektrodenlasche (11) umfasst, sodass sie im selben Quadranten unter den unterteilten Quadranten positioniert sind und auf dem horizontalen Querschnitt der Elektrodenanordnung vom Jelly-Roll-Typ nicht kollinear zueinander sind.

5. Verfahren nach Anspruch 4, wobei das Anordnen der ersten Radiallinie und der zweiten Radiallinie, sodass sie nicht kollinear zueinander sind, umfasst:
• Berechnen eines vorhergesagten Umfangs der Elektrodenanordnung vom Jelly-Roll-Typ gemäß einer Anzahl von Windungen gemäß der nachstehenden Gleichung 1; und
• Auswählen einer Position der negativen Elektrodenlasche (11) aus dem berechneten vorhergesagten Umfang: [Gleichung 1] ${a}_{n} = {a}_{n - 1} + 2 b$
wobei in Gleichung 1
• aₙ einen Durchmesser der Elektrodenanordnung vom Jelly-Roll-Typ für jede entsprechende Anzahl von Windungen bezeichnet;
• aₙ₋₁ einen Durchmesser der Elektrodenanordnung vom Jelly-Roll-Typ für jede vorherige Anzahl von Windungen bezeichnet;
• b eine Dicke einer sich wiederholenden Schicht bezeichnet, die sich bei einer entsprechenden Anzahl von Windungen erhöht;
• n eine ganze Zahl größer als oder gleich 1 ist und die Anzahl der Windungen der Elektrodenanordnung vom Jelly-Roll-Typ bezeichnet; und
• wenn n gleich 1 ist, a₀ einen Durchmesser des Wickelkerns bezeichnet.

6. Verfahren nach Anspruch 5, wobei das Auswählen der Position der negativen Elektrodenlasche (11) das Positionieren der positiven Elektrodenlasche (10) vor dem Wickeln der Elektrodenanordnung vom Jelly-Roll-Typ und das Positionieren der negativen Elektrodenlasche (11) derart umfasst, dass sie um eine durch die nachstehende Gleichung 2 berechnete Distanz von der positiven Elektrodenlasche (10) beabstandet ist: [Gleichung 2] ${L}_{n} = {\sum }_{k = 1}^{n} \left({a}_{k}\right) π$ wobei in Gleichung 2
• Lₙ einen Trennabstand zwischen der positiven Elektrodenlasche und der negativen Elektrodenlasche auf der ungewickelten Elektrodenanordnung vom Jelly-Roll-Typ bezeichnet, wenn die erste Radiallinie und die zweite Radiallinie so positioniert sind, dass sie kollinear zueinander sind,
• aₖ einen Durchmesser der gewickelten Elektrodenanordnung vom Jelly-Roll-Typ bezeichnet, und
• n eine ganze Zahl gleich oder größer als 1 ist und die Anzahl der Windungen der Elektrodenanordnung vom Jelly-Roll-Typ bezeichnet.

7. Verfahren nach Anspruch 6, wobei das Auswählen der Position der negativen Elektrodenlasche (11) das Positionieren der positiven Elektrodenlasche (10) an einem Startpunkt, an dem die Elektrodenanordnung vom Jelly-Roll-Typ gewickelt wird, und das Positionieren der negativen Elektrodenlasche (11) derart umfasst, dass sie um die durch Gleichung 2 berechnete Distanz von der positiven Elektrodenlasche (10) beabstandet ist.

## Revendications

1. Une batterie secondaire cylindrique comprenant :
• un ensemble d'électrodes de type jelly-roll ;
• un boîtier cylindrique ; et
• une patte d'électrode positive (10) et une patte d'électrode négative (11) qui sont couplées à l'ensemble d'électrodes de type jelly-roll,
dans laquelle, lorsqu'une coupe transversale horizontale perpendiculaire à un noyau d'enroulement de l'ensemble d'électrodes de type jelly-roll est divisée en quadrants, la batterie secondaire cylindrique présente une structure dans laquelle la patte d'électrode positive (10) et la patte d'électrode négative (11) sont positionnées dans le même quadrant, **caractérisée en ce que**
la batterie secondaire cylindrique présente une structure dans laquelle, sur la coupe transversale horizontale de l'ensemble d'électrodes de type jelly-roll, une première ligne radiale depuis un noyau d'enroulement jusqu'à la patte d'électrode positive (10) et une seconde ligne radiale depuis le noyau d'enroulement jusqu'à la patte d'électrode négative (11) sont positionnées dans le même quadrant parmi les quadrants divisés et sont positionnées de manière à ne pas être colinéaires l'une avec l'autre.

2. La batterie secondaire cylindrique selon la revendication 1, dans laquelle la batterie secondaire cylindrique présente une structure dans laquelle, sur la coupe transversale horizontale de l'ensemble d'électrodes de type jelly-roll, une première ligne radiale depuis un noyau d'enroulement jusqu'à la patte d'électrode positive (10) et une seconde ligne radiale depuis le noyau d'enroulement jusqu'à la patte d'électrode négative (11) sont positionnées dans le même quadrant parmi les quadrants divisés et forment un angle allant de 15 ° à 80 °.

3. La batterie secondaire cylindrique selon la revendication 1, comprenant en outre un conducteur d'électrode connecté électriquement à la patte d'électrode positive (10) ou à la patte d'électrode négative (11) par liaison ou soudage.

4. Procédé de fabrication d'une batterie secondaire cylindrique selon la revendication 1, le procédé comprenant :
• la fabrication d'un ensemble d'électrodes de type jelly-roll dans lequel, lorsqu'une coupe transversale horizontale perpendiculaire à un noyau d'enroulement est divisée en quadrants, une patte d'électrode positive (10) et une patte d'électrode négative (11) sont disposées dans le même quadrant ; et
• l'insertion de l'ensemble d'électrodes de type jelly-roll dans un boîtier de batterie cylindrique et l'injection d'une solution d'électrolyte dans le boîtier de batterie cylindrique,
**caractérisé en ce que** la fabrication de l'ensemble d'électrodes de type jelly-roll comprend l'agencement d'une première ligne radiale depuis un noyau d'enroulement jusqu'à la patte d'électrode positive (10) et d'une seconde ligne radiale depuis le noyau d'enroulement jusqu'à la patte d'électrode négative (11) pour être positionnées dans le même quadrant parmi les quadrants divisés et pour ne pas être colinéaires l'une avec l'autre sur la coupe transversale horizontale de l'ensemble d'électrodes de type jelly-roll.

5. Procédé selon la revendication 4, dans lequel l'agencement de la première ligne radiale et de la seconde ligne radiale pour ne pas être colinéaires l'une avec l'autre comprend :
• le calcul d'une circonférence prédite de l'ensemble d'électrodes de type jelly-roll selon un nombre d'enroulements selon l'Équation 1 ci-dessous ; et
• la sélection d'une position de la patte d'électrode négative (11) à partir de la circonférence prédite calculée : [Equation 1] ${a}_{n} = {a}_{n - 1} + 2 b$
dans lequel, dans l'Équation 1,
• aₙ désigne un diamètre de l'ensemble d'électrodes de type jelly-roll pour chaque nombre d'enroulements correspondant ;
• aₙ₋₁ désigne un diamètre de l'ensemble d'électrodes de type jelly-roll pour chaque nombre d'enroulements précédent ;
• b désigne une épaisseur d'une couche répétitive qui augmente à un nombre d'enroulements correspondant ;
• n est un nombre entier supérieur ou égal à 1 et désigne le nombre d'enroulements de l'ensemble d'électrodes de type jelly-roll ; et
• lorsque n vaut 1, a₀ désigne un diamètre du noyau d'enroulement.

6. Procédé selon la revendication 5, dans lequel la sélection de la position de la patte d'électrode négative (11) comprend le positionnement de la patte d'électrode positive (10) avant l'enroulement de l'ensemble d'électrodes de type jelly-roll et le positionnement de la patte d'électrode négative (11) pour être espacée de la patte d'électrode positive (10) d'une distance calculée par l'Équation 2 ci-dessous : [Equation 2] ${L}_{n} = {\sum }_{k = 1}^{n} \left({a}_{k}\right) π$ dans lequel, dans l'Équation 2,
• Lₙ désigne une distance de séparation entre la patte d'électrode positive et la patte d'électrode négative sur l'ensemble d'électrodes de type jelly-roll non enroulé lorsque la première ligne radiale et la seconde ligne radiale sont positionnées de manière à être colinéaires l'une avec l'autre,
• aₖ désigne un diamètre de l'ensemble d'électrodes de type jelly-roll enroulé, et
• n est un nombre entier égal ou supérieur à 1 et désigne le nombre d'enroulements de l'ensemble d'électrodes de type jelly-roll.

7. Procédé selon la revendication 6, dans lequel la sélection de la position de la patte d'électrode négative (11) comprend le positionnement de la patte d'électrode positive (10) au niveau d'un point de départ auquel l'ensemble d'électrodes de type jelly-roll est enroulé et le positionnement de la patte d'électrode négative (11) pour être espacée de la patte d'électrode positive (10) de la distance calculée par l'Équation 2.
